# FASCICULE DE BREVET EUROPEEN

(11) **EP 4 229 290 B1**
(45) Date de publication et mention de la délivrance du brevet: **27.11.2024**
(21) Numéro de dépôt: 21810071.7
(22) Date de dépôt: 13.10.2021
(51) Int. Cl.: F02K 1/76

(54) **SYSTÈME D'INVERSION DE POUSSÉE POUR UN AÉRONEF ET AÉRONEF COMPORTANT UN TEL SYSTÈME**
SCHUBUMKEHRSYSTEM FÜR EIN FLUGZEUG UND FLUGZEUG MIT EINEM SOLCHEN SYSTEM
THRUST-REVERSAL SYSTEM FOR AN AIRCRAFT AND AIRCRAFT INCLUDING SUCH A SYSTEM

(30) Priorité: 13.10.2020 FR 2010454
(43) Date de publication de la demande: 23.08.2023
(73) Titulaire: Safran Nacelles, 76700 Gonfreville-l'Orcher (FR)
(72) Inventeur: MAALIOUNE, Hakim, 77550 MOISSY-CRAMAYEL (FR); LEROUVREUR, Matthieu, 77550 MOISSY-CRAMAYEL (FR); PEYRON, Vincent Jean-François, 77550 MOISSY-CRAMAYEL (FR)
(74) Mandataire: Gevers & Orès
(86) Numéro de dépôt international: PCT/FR2021/051774
(87) Numéro de publication internationale: WO 2022/079386

(56) Documents cités:
- US-A1- 2004 118 974
- US-A1- 2006 101 806
- US-A1- 2015 097 499
- US-A1- 2018 291 838

## Description

La présente invention concerne un système d'inversion de poussée pour un aéronef et un aéronef comportant un tel système.

Un système d'inversion de poussée selon l'art antérieur est connu dans le document US 2004/118974 A1.

L'aéronef A380 et l'aéronef C919 comportent chacun un système d'inversion de poussée, du type comportant :
- un capot d'inversion de poussée conçu pour être sélectivement déplacé entre une position repliée pour laisser inchangée la poussée d'une turbomachine de l'aéronef et une position déployée pour inverser la poussée de la turbomachine ;
- un actionneur électrique du capot ;
- un module de commande local conçu pour recevoir des commandes depuis un module de commande global afin de commander l'actionneur électrique de manière à déplacer le capot, ces commandes incluant :
   - une commande de repli pour déplacer le capot dans sa position repliée, et
   - une commande de déploiement pour déplacer le capot dans sa position déployée ; et
- une connexion entre le module de commande global et le module de commande local pour véhiculer au moins un signal analogique.

Le module de commande global est généralement désigné par l'acronyme EEC (de l'anglais « Engine Electronic Control »), tandis que le module de commande local est généralement désigné par l'acronyme ETRAS (de l'anglais « Electrical Thrust Reverser Actuation System »). En outre, dans ces aéronefs, la connexion entre le module de commande global EEC et le module de commande local ETRAS est un bus numérique, en particulier selon la norme ARINC 429.

Selon cette norme, les données échangées sont codées sous forme de mots de 32 bits découpés en plusieurs champs distincts.

Toujours selon cette norme, le bus numérique comporte une paire de brins torsadés et les bits sont séquentiellement transmis sous la forme d'un signal analogique de tension entre les deux brins prenant, pour chaque bit, une valeur haute lorsque le bit vaut 1 et une valeur basse lorsque le bit vaut 0.

Ainsi, la mise en œuvre de cette norme implique de prévoir des composants complexes à la fois dans le module de commande global EEC pour coder les commandes sous la forme de mots de 32 bits et dans le module de commande local ETRAS pour décoder les mots de 32 bits reçus et en déduire les commandes.

Il peut ainsi être souhaité de prévoir un système d'inversion de poussée qui permette de s'affranchir d'au moins une partie des problèmes et contraintes précités.

Il est donc proposé un système d'inversion de poussée du type précité, caractérisé en ce que le module de commande local est conçu pour :
- identifier une parmi plusieurs plages de valeurs prédéfinies, dans laquelle se trouve chaque signal analogique à un instant donné, chaque commande étant associée à une ou plusieurs des plages de valeurs ; et
- déterminer la commande reçue comme étant celle associée à la ou aux plages de valeurs identifiées.

Grâce à l'invention, des composants simples peuvent être utilisés dans le module de commande local. Ainsi, le module de commande local est simplifié par rapport notamment à celui nécessaire avec une connexion ARINC 42.

De façon optionnelle, la connexion comporte deux connecteurs électriques véhiculant respectivement deux signaux analogiques de tension, chacun associé à deux plages de valeurs, chaque commande étant associée à l'une respective de combinaisons prédéfinies des plages de valeurs pour les deux connecteurs électriques.

De façon optionnelle également, la connexion comporte un connecteur électrique véhiculant un signal analogique de courant associé à plusieurs plages de valeurs, chaque commande étant associée à l'une respective des plages de valeurs.

De façon optionnelle également, le module de commande local comporte un convertisseur analogique numérique conçu pour convertir le ou les signaux analogiques en données numériques et un module numérique conçu pour traiter ces données numériques pour déterminer les commandes et commander l'actionneur électrique.

De façon optionnelle également, le module de commande local comporte un circuit analogique conçu pour traiter le ou les signaux analogiques pour déterminer les commandes et commander l'actionneur électrique.

De façon optionnelle également, l'actionneur électrique comporte un moteur électrique de déplacement du capot et un onduleur conçu pour activer électriquement le moteur électrique à partir d'un bus de tension continue et le module de commande local est conçu pour commander l'onduleur.

De façon optionnelle également, le système d'inversion de poussée comporte en outre un dispositif de verrouillage dit primaire conçu pour sélectivement verrouiller et déverrouiller le moteur électrique de l'actionneur électrique du capot d'inversion de poussée et le module de commande local est conçu :
- sur réception de la commande de déploiement, pour commander le dispositif de verrouillage primaire afin de déverrouiller le moteur électrique de l'actionneur électrique du capot d'inversion de poussée de l'actionneur électrique du capot d'inversion de poussée, avant que le capot ait été déplacé dans sa position déployée ; et
- sur réception de la commande de repli, pour commander le dispositif de verrouillage primaire afin de verrouiller le moteur électrique de l'actionneur électrique du capot d'inversion de poussée, après que le capot a été déplacé dans sa position repliée.

De façon optionnelle également, le système d'inversion de poussée comporte en outre un dispositif de verrouillage dit tertiaire conçu pour sélectivement verrouiller et déverrouiller le capot, le capot est en outre conçu pour être sélectivement déplacé dans une position dégagée facilitant un déverrouillage du capot par le dispositif de verrouillage tertiaire, les commandes incluent une commande de dégagement et le module de commande local est conçu, sur réception de la commande de dégagement, pour commander le dispositif de verrouillage primaire afin de déverrouiller le moteur électrique de l'actionneur électrique du capot d'inversion de poussée avant de commander l'onduleur afin que le capot soit déplacé dans sa position de dégagement.

Il est également proposé un aéronef comportant :
- une turbomachine ; et
- un système d'inversion de poussée selon l'invention.

L'invention sera mieux comprise à l'aide de la description qui va suivre, donnée uniquement à titre d'exemple et faite en se référant aux dessins annexés dans lesquels :
[Fig. 1] la figure 1 est une vue simplifiée d'un aéronef comportant un système d'inversion de poussée selon un premier mode de réalisation de l'invention,
[Fig. 2] la figure 2 est une vue simplifiée d'un aéronef comportant un système d'inversion de poussée selon un premier mode de réalisation de l'invention, et
[Fig. 3] la figure 3 est une vue simplifiée d'un aéronef comportant un système d'inversion de poussée selon un premier mode de réalisation de l'invention.

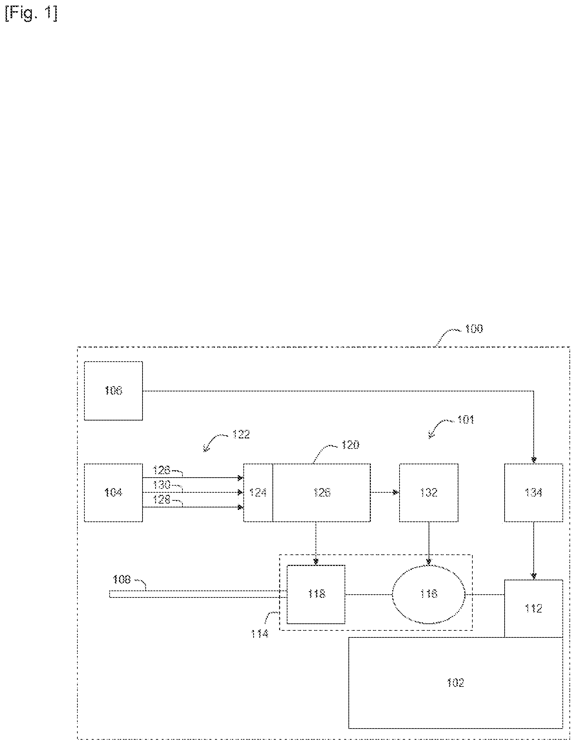

En référence à la figure 1, un aéronef 100 comportant un système 101 d'inversion de poussée selon un premier mode de réalisation de l'invention, va à présent être décrit.

L'aéronef 100 comporte tout d'abord une turbomachine 102.

L'aéronef 100 comporte en outre un module de commande global 104, tel qu'un EEC.

L'aéronef 100 comporte en outre différents organes, regroupés sous la référence 106, différents du moteur de l'aéronef, par exemple des calculateurs avions, des alimentations avions, etc.

L'aéronef 100 comporte en outre un bus de tension continue 108.

Le système 101 d'inversion de poussée comporte tout d'abord un capot 112 d'inversion de poussée conçu pour être sélectivement déplacé entre une position repliée pour laisser inchangée la poussée de la turbomachine 102 et une position déployée pour inverser la poussée de la turbomachine 102.

Le système 101 comporte en outre un actionneur électrique 114 du capot 112.

Dans l'exemple décrit, l'actionneur électrique 114 comporte un moteur électrique 116 de déplacement du capot 112 et un onduleur 118 conçu pour activer électriquement le moteur électrique 116 à partir du bus de tension continue 108.

Le système 101 comporte en outre un module de commande local 120, tel qu'un ETRAS.

Le système 101 comporte en outre une connexion 122 entre le module de commande global 104 et le module de commande local 120. Cette connexion 122 est conçue pour véhiculer au moins un signal analogique depuis le module de commande global 104 et le module de commande local 120. Ce ou ces signaux analogiques représentent des commandes pour le module de commande local 120.

Dans l'exemple décrit, la connexion 122 comporte trois conducteurs électriques 124, 126 et 128. Les deux premiers conducteurs électriques 124, 126 sont destinés pour véhiculer respectivement deux signaux analogiques de tension V1, V2, référencés par rapport au troisième conducteur électrique 128 formant une masse électrique.

Toujours dans l'exemple décrit, le module de commande local 120 comporte un convertisseur analogique numérique 124 conçu pour convertir le ou les signaux analogiques (les tensions V1, V2 dans l'exemple décrit) en données numériques et un module numérique 126 conçu pour traiter ces données numériques pour déterminer les commandes reçues.

Les commandes incluent notamment : une commande de repli (de l'anglais « STOW ») pour déplacer le capot 112 dans sa position repliée et une commande de déploiement (de l'anglais « DEPLOY ») pour déplacer le capot 112 dans sa position déployée.

Par ailleurs, dans l'exemple décrit, le système 101 comporte plusieurs dispositifs de verrouillage pour éviter un déploiement intempestif du capot 112, par exemple en dehors de la phase d'atterrissage de l'aéronef 100.

Ainsi, le système 101 comporte en outre un dispositif de verrouillage dit primaire 132 (de l'anglais « Primary Lock System ») conçu pour sélectivement verrouiller (par exemple par blocage mécanique) et déverrouiller le moteur électrique 116 de l'actionneur électrique 114 du capot 112 d'inversion de poussée. Dans ce cas, le module de commande local 120 est conçu pour, sur réception de la commande de déploiement (DEPLOY), commander le dispositif de verrouillage primaire 132 afin de déverrouiller le moteur électrique 116 de l'actionneur électrique 114 du capot 112 d'inversion de poussée, avant que le capot 112 ait été déplacé dans sa position déployée. Il est en outre conçu pour, sur réception de la commande de repli (STOW), commander le dispositif de verrouillage primaire 132 afin de verrouiller le moteur électrique 116 de l'actionneur électrique 114 du capot 112 d'inversion de poussée, après que le capot 112 a été déplacé dans sa position repliée.

Généralement, deux systèmes d'inversion de poussée tels que le système 101 sont prévus, avec les capots respectivement liés l'un à l'autre. Ainsi, le dispositif de verrouillage primaire d'un des systèmes forme un dispositif de verrouillage dit secondaire pour l'autre système.

Le système 101 comporte en outre un dispositif de verrouillage dit tertiaire 134 (de l'anglais « Tertiary Lock System ») conçu pour sélectivement verrouiller et déverrouiller le capot 112. Dans ce cas, le capot 112 est de préférence en outre conçu pour être sélectivement déplacé dans une position dégagée facilitant un déverrouillage du capot par le dispositif de verrouillage tertiaire 134. Cette position dégagée est généralement une position encore plus repliée. Les commandes comportent alors en outre une commande de dégagement (de l'anglais « OVERSTOW ») et le module de commande local 120 est alors conçu pour, sur réception de la commande de dégagement (OVERSTOW), pour commander le dispositif de verrouillage primaire 132 afin de déverrouiller le moteur électrique 116 de l'actionneur électrique 114 du capot 112 d'inversion de poussée, avant de commander l'onduleur 118 afin que le capot 112 soit déplacé dans sa position de dégagement.

Le dispositif de verrouillage tertiaire 134 est par exemple commandé par les organes 106, par exemple par une manette prévue dans un cockpit de l'aéronef 100 qui active la fermeture d'un relais. Néanmoins, bien d'autre moyens de commande du dispositif de verrouillage tertiaire 134 peuvent être prévus.

Comme expliqué précédemment, le module de commande local 120 est conçu pour recevoir des commandes depuis le module de commande global 104, via la connexion 122, afin de commander l'actionneur électrique 114, et plus précisément l'onduleur 118 dans l'exemple décrit, de manière à déplacer le capot 112.

De manière générale, le module de commande local 120 est conçu pour identifier une parmi plusieurs plages de valeurs prédéfinies, dans laquelle se trouve chaque signal analogique à un instant donné, chaque commande étant associée à une ou plusieurs des plages de valeurs. Le module de commande local 120 est en outre conçu pour déterminer la commande reçue comme étant celle associée à la ou aux plages de valeurs identifiées.

Plus précisément, dans l'exemple décrit, les signaux analogiques de tension V1, V2 sont chacun associé à deux plages de valeurs. Par exemple, l'une de ces deux plages de valeurs s'étend autour de la tension nulle et l'autre plages de valeurs s'étend autour de 28 V. Chaque commande est associée à l'une respective de combinaisons prédéfinies des plages de valeurs des deux signaux analogiques de tension V1 , V2. Ainsi, il peut être considéré que les commandes sont codées sur trois bits [ b1 b2 b3 ] respectivement transmis par les trois conducteurs électriques 126, 130, 128. Le premier bit b1 est transmis par le premier conducteur électrique 126 et ses valeurs correspondent aux deux plages de valeurs pour ce premier conducteur électrique 126. Le deuxième bit b2 est transmis par le troisième conducteur électrique 130 qui n'est pas destiné à transmettre de signal analogique de sorte que le deuxième bit b2 reste à la même valeur, par exemple nulle. Le troisième bit b3 est transmis par le deuxième conducteur électrique 128 et ses valeurs correspondent aux deux plages de valeurs pour ce deuxième conducteur électrique 128.

Ainsi, dans l'exemple décrit, les commandes sont codées par les bits [ b1 b2 b3 ] de la manière suivante :

**[Tableau 1]**

| [ b1 b2 b3 ] | Commande |
|---|---|
| [ 0 0 0 ] | Pas de commande |
| [ 1 0 1 ] | OVERSTOW |
| [ 1 0 1 ] | DEPLOY |
| [ 1 0 0 ] | STOW |

Ainsi, dans l'exemple décrit, les commandes OVERSTOW et DEPLOY ont le même code. Dans ce cas, par exemple, sur réception de ce code, la commande OVERSTOW peut être réalisée, puis après un certain temps de retard (mis en œuvre par exemple par un dispositif retardateur) la commande DEPLOY peut être automatiquement réalisée, sans nécessiter la réception d'un nouveau code. Alternativement, deux codes différents pourraient être respectivement associés aux commandes OVERSTOW et DEPLOY, ces dernières étant chacune réalisées sur réception de leur code associé.

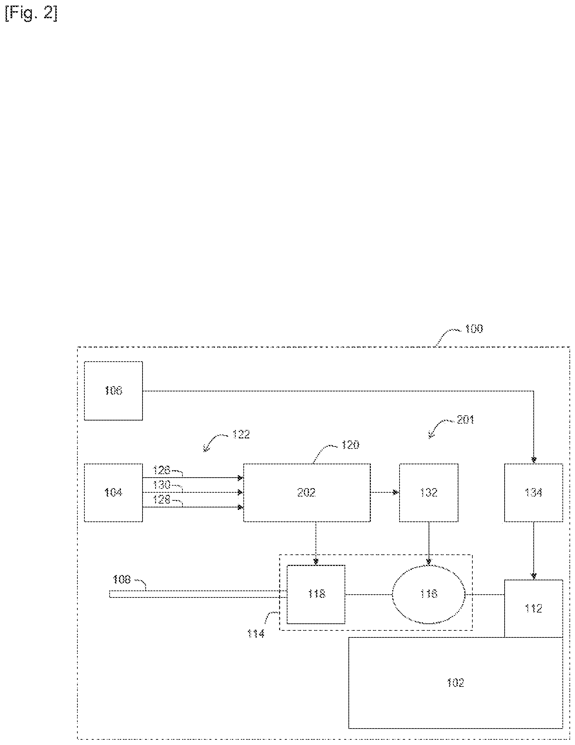

En référence à la figure 2, un système 201 d'inversion de poussée selon un deuxième mode de réalisation de l'invention, va à présent être décrit. Le système 201 est similaire à celui de la figure 1, si ce n'est que le module de commande local 120 comporte, à la place de 124 et 126, un circuit analogique 202 pour déduire les commandes et commander en conséquence l'onduleur 118.

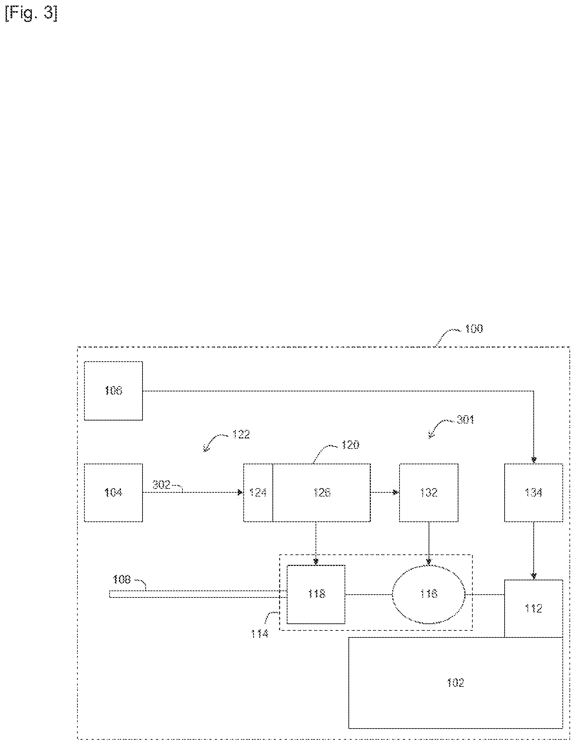

En référence à la figure 3, un système 301 d'inversion de poussée selon un troisième mode de réalisation de l'invention, va à présent être décrit. Le système 301 est similaire à celui de la figure 1, si ce n'est que la connexion 122 comporte un connecteur électrique 304 véhiculant un signal analogique de courant associé à plusieurs plages de valeurs, chaque commande étant associée à l'une respective des plages de valeurs. De préférence, les plages de valeurs ne se recouvrent pas afin d'éviter du bagotage de commande. De préférence encore, les plages de valeurs sont disjointes, sauf éventuellement entre les plages respectives des commandes OVERTOW et DEPLOY.

Dans l'exemple décrit, les commandes sont codées de la manière suivante :

**[Tableau 2]**

| Plage de valeurs de courant | Commande |
|---|---|
| [ valeur 1 - valeur 2 ] | OVERSTOW |
| [ valeur 2 - valeur 3 ] | DEPLOY |
| [ valeur 4 - valeur 5 ] | STOW |

Les valeurs en dehors de ces plages de commande sont considérées comme invalides.

Il apparaît clairement qu'un système d'inversion de poussée tel que ceux décrits précédemment permet l'utilisation de composants simples.

On notera par ailleurs que l'invention n'est pas limitée aux modes de réalisation décrits précédemment. Il apparaîtra en effet à l'homme de l'art que diverses modifications peuvent être apportées aux modes de réalisation décrits ci-dessus, à la lumière de l'enseignement qui vient de lui être divulgué.

Dans la présentation détaillée de l'invention qui est faite précédemment, les termes utilisés ne doivent pas être interprétés comme limitant l'invention aux modes de réalisation exposés dans la présente description, mais doivent être interprétés pour y inclure tous les équivalents dont la prévision est à la portée de l'homme de l'art en appliquant ses connaissances générales à la mise en œuvre de l'enseignement qui vient de lui être divulgué.

## Revendications

1. Système (101 ; 201 ; 301) d'inversion de poussée pour un aéronef (100), comportant :
- un capot (112) d'inversion de poussée conçu pour être sélectivement déplacé entre une position repliée pour laisser inchangée la poussée d'une turbomachine (102) de l'aéronef (100) et une position déployée pour inverser la poussée de la turbomachine (102) ;
- un actionneur électrique (114) du capot (112) ;
- un module de commande local (120) conçu pour recevoir des commandes depuis un module de commande global (104) afin de commander l'actionneur électrique (114) de manière à déplacer le capot (112), ces commandes incluant :
• une commande de repli pour déplacer le capot (112) dans sa position repliée, et
• une commande de déploiement pour déplacer le capot (112) dans sa position déployée ; et
- une connexion (122) entre le module de commande global (104) et le module de commande local (120) pour véhiculer au moins un signal analogique ;
**caractérisé en ce que** le module de commande local (120) est conçu pour :
- identifier une parmi plusieurs plages de valeurs prédéfinies, dans laquelle se trouve chaque signal analogique à un instant donné, chaque commande étant associée à une ou plusieurs des plages de valeurs ; et
- déterminer la commande reçue comme étant celle associée à la ou aux plages de valeurs identifiées.

2. Système (101 ; 201) d'inversion de poussée selon la revendication 1, dans lequel la connexion (122) comporte deux connecteurs électriques (126, 128) véhiculant respectivement deux signaux analogiques de tension, chacun associé à deux plages de valeurs, chaque commande étant associée à l'une respective de combinaisons prédéfinies des plages de valeurs pour les deux connecteurs électriques (126, 128).

3. Système (301) d'inversion de poussée selon la revendication 1, dans lequel la connexion (122) comporte un connecteur électrique (302) véhiculant un signal analogique de courant associé à plusieurs plages de valeurs, chaque commande étant associée à l'une respective des plages de valeurs.

4. Système (101 ; 301) d'inversion de poussée selon l'une quelconque des revendications 1 à 3, dans lequel le module de commande local (120) comporte un convertisseur analogique numérique (124) conçu pour convertir le ou les signaux analogiques en données numériques et un module numérique (126) conçu pour traiter ces données numériques pour déterminer les commandes et commander l'actionneur électrique (114).

5. Système (201) d'inversion de poussée selon l'une quelconque des revendications 1 à 3, dans lequel le module de commande local (120) comporte un circuit analogique (202) conçu pour traiter le ou les signaux analogiques pour déterminer les commandes et commander l'actionneur électrique (114).

6. Système (101 ; 201 ; 301) d'inversion de poussée selon l'une quelconque des revendications 1 à 5, dans lequel l'actionneur électrique (114) comporte un moteur électrique (116) de déplacement du capot (112) et un onduleur (118) conçu pour activer électriquement le moteur électrique (116) à partir d'un bus de tension continue (108) et dans lequel le module de commande local (120) est conçu pour commander l'onduleur (118).

7. Système (101 ; 201 ; 301) d'inversion de poussée selon la revendication 6, comportant en outre un dispositif de verrouillage dit primaire (132) conçu pour sélectivement verrouiller et déverrouiller le moteur électrique (116) de l'actionneur électrique (114) du capot (112) d'inversion de poussée et dans lequel le module de commande local (120) est conçu :
- sur réception de la commande de déploiement, pour commander le dispositif de verrouillage primaire (132) afin de déverrouiller le moteur électrique (116) de l'actionneur électrique (114) du capot (112) d'inversion de poussée de l'actionneur électrique (114) du capot (112) d'inversion de poussée, avant que le capot (112) ait été déplacé dans sa position déployée ; et
- sur réception de la commande de repli, pour commander le dispositif de verrouillage primaire (132) afin de verrouiller le moteur électrique (116) de l'actionneur électrique (114) du capot (112) d'inversion de poussée, après que le capot (112) a été déplacé dans sa position repliée.

8. Système (101 ; 201 ; 301) d'inversion de poussée selon la revendication 6 ou 7, comportant en outre un dispositif de verrouillage dit tertiaire (134) conçu pour sélectivement verrouiller et déverrouiller le capot (112), dans lequel le capot (112) est en outre conçu pour être sélectivement déplacé dans une position dégagée facilitant un déverrouillage du capot (112) par le dispositif de verrouillage tertiaire (134), dans lequel les commandes incluent une commande de dégagement et dans lequel le module de commande local (120) est conçu, sur réception de la commande de dégagement, pour commander le dispositif de verrouillage primaire (132) afin de déverrouiller le moteur électrique (116) de l'actionneur électrique (114) du capot (112) d'inversion de poussée avant de commander l'onduleur (118) afin que le capot (112) soit déplacé dans sa position de dégagement.

9. Aéronef (100) comportant :
- une turbomachine (102) ; et
- un système (101 ; 201 ; 301) d'inversion de poussée selon l'une quelconque des revendications 1 à 8.

## Patentansprüche

1. Schubumkehrsystem (101; 201; 301) für ein Flugzeug (100), umfassend:
- eine Haube (112) zur Schubumkehr, die dazu ausgestaltet ist, selektiv verschoben zu werden zwischen einer zusammengeklappten Position, um den Schub eines Turbotriebwerks (102) des Flugzeugs (100) unverändert zu lassen, und einer ausgefahrenen Position, um den Schub des Turbotriebwerks (102) umzukehren;
- ein elektrisches Stellglied (114) der Haube (112);
- ein lokales Steuerungsmodul (120), das dazu ausgestaltet ist, Befehle ausgehend von einem globalen Steuerungsmodul (104) zu empfangen, um das elektrische Stellglied (114) derart zu steuern, dass die Haube (112) verschoben wird, wobei diese Befehle einschließen:
- einen Befehl zum Zusammenklappen, um die Haube (112) in ihre zusammengeklappte Position zu verschieben, und
- einen Befehl zum Ausfahren, um die Haube (112) in ihre ausgefahrene Position zu verschieben; und
- eine Verbindung (122) zwischen dem globalen Steuerungsmodul (104) und dem lokalen Steuerungsmodul (120), um mindestens ein analoges Signal zu übertragen;
**dadurch gekennzeichnet, dass** das lokale Steuerungsmodul (120) ausgestaltet ist zum:
- Identifizieren eines unter mehreren vorab definierten Wertebereichen, in dem sich jedes analoge Signal zu einem gegebenen Zeitpunkt befindet, wobei jeder Befehl einem oder mehreren Wertebereichen zugeordnet ist; und
- Bestimmen des empfangenen Befehls als denjenigen, der dem oder den identifizierten Wertebereichen zugeordnet ist.

2. Schubumkehrsystem (101; 201) nach Anspruch 1, wobei die Verbindung (122) zwei elektrische Verbindungsteile (126, 128) umfasst, die jeweils zwei analoge Spannungssignale übertragen, die jeweils zwei Wertebereichen zugeordnet sind, wobei jeder Befehl einer entsprechenden von vorab definierten Kombinationen der Wertebereiche für die zwei elektrischen Verbindungsteile (126, 128) zugeordnet ist.

3. Schubumkehrsystem (301) nach Anspruch 1, wobei die Verbindung (122) ein elektrisches Verbindungsteil (302) umfasst, das ein analoges Stromsignal überträgt, das mehreren Wertebereichen zugeordnet ist, wobei jeder Befehl einem entsprechenden der Wertebereiche zugeordnet ist.

4. Schubumkehrsystem (101; 301) nach einem der Ansprüche 1 bis 3, wobei das lokale Steuerungsmodul (120) einen Analog-Digital-Wandler (124) umfasst, der dazu ausgestaltet ist, das oder die analogen Signale in digitale Daten umzuwandeln, und ein digitales Modul (126), das dazu ausgestaltet ist, diese digitalen Daten zu verarbeiten, um die Befehle zu bestimmen und das elektrische Stellglied (114) zu steuern.

5. Schubumkehrsystem (201) nach einem der Ansprüche 1 bis 3, wobei das lokale Steuerungsmodul (120) einen analogen Schaltkreis (202) umfasst, der dazu ausgestaltet ist, das oder die analogen Signale zu verarbeiten, um die Befehle zu bestimmen und das elektrische Stellglied (114) zu steuern.

6. Schubumkehrsystem (101; 201; 301) nach einem der Ansprüche 1 bis 5, wobei das elektrische Stellglied (114) einen Elektromotor (116) zum Verschieben der Haube (112) und einen Wechselrichter (118) umfasst, der dazu ausgestaltet ist, den Elektromotor (116) ausgehend von einem Gleichstrombus (108) elektrisch zu aktivieren, und wobei das lokale Steuerungsmodul (120) dazu ausgestaltet ist, den Wechselrichter (118) zu steuern.

7. Schubumkehrsystem (101; 201; 301) nach Anspruch 6, das weiter eine als primäre bezeichnete Verriegelungsvorrichtung (132) umfasst, die dazu ausgestaltet ist, den Elektromotor (116) des elektrischen Stellglieds (114) der Haube (112) zur Schubumkehr selektiv zu verriegeln und zu entriegeln, und wobei das lokale Steuerungsmodul (120) ausgestaltet ist zum:
- bei Empfang des Befehls zum Ausfahren die primäre Verriegelungsvorrichtung (132) zu steuern, um den Elektromotor (116) des elektrischen Stellglieds (114) der Haube (112) zur Schubumkehr des elektrischen Stellglieds (114) der Haube (112) zur Schubumkehr zu entriegeln, bevor die Haube (112) in ihre ausgefahrene Position verschoben wird; und
- bei Empfang des Befehls zum Zusammenklappen die primäre Verriegelungsvorrichtung (132) zu steuern, um den Elektromotor (116) des elektrischen Stellglieds (114) der Haube (112) zur Schubumkehr zu verriegeln, nachdem die Haube (112) in ihre ausgefahrene Position verschoben wurde.

8. Schubumkehrsystem (101; 201; 301) nach Anspruch 6 oder 7, das weiter eine als tertiäre bezeichnete Verriegelungsvorrichtung (134) umfasst, die dazu ausgestaltet ist, die Haube (112) selektiv zu verriegeln und zu entriegeln, wobei die Haube (112) weiter dazu ausgestaltet ist, selektiv in eine Freigabeposition verschoben zu werden, die eine Entriegelung der Haube (112) durch die tertiäre Verriegelungsposition (134) erleichtert, wobei die Befehle einen Rückzugsbefehl einschließen und wobei das lokale Steuerungsmodul (120) dazu ausgestaltet ist, bei Empfang des Befehls zum Zurückziehen die primäre Verriegelungsvorrichtung (132) zu steuern, um den Elektromotor (116) des elektrischen Stellglieds (114) der Haube (112) zur Schubumkehr zu entriegeln, bevor es den Wechselrichter (118) steuert, damit die Haube (112) in ihre Rückzugsposition verschoben wird.

9. Flugzeug (100), umfassend:
- ein Turbotriebwerk (102); und
- ein Schubumkehrsystem (101; 201; 301) nach einem der Ansprüche 1 bis 8.

## Claims

1. A thrust-reversal system (101; 201; 301) for an aircraft (100), comprising :
- a thrust-reversal cover (112) designed to be selectively moved between a stowed position for leaving unchanged the thrust of a turbine engine (102) of the aircraft (100), and a deployed position for reversing the thrust of the turbine engine (102);
- an electric actuator (114) of the cover (112);
- a local command module (120) designed to receive commands from a global command module (104) in order to control the electric actuator (114) in such a way as to move the cover (112), these commands including:
• a stow command to move the cover (112) to its stowed position, and
• a deploy command to move the cover (112) to its deployed position; and
- a connection (122) between the global command module (104) and the local command module (120) for conveying at least one analogue signal;
**characterised in that** the local command module (120) is designed to:
- identify one among several predefined ranges of values in which each analogue signal is located at a given instant, each command being associated with one or more of the ranges of values; and
- determine the received command as being associated with the identified range or ranges of values.

2. The thrust-reversal system (101; 201) according to claim 1, wherein the connection (122) comprises two electrical connectors (126, 128) conveying respectively two analogue voltage signals, each associated with two ranges of values, each command being associated with a respective one of predefined combinations of the ranges of values for the two electrical connectors (126, 128).

3. The thrust-reversal system (301) according to claim 1, wherein the connection (122) comprises an electrical connector (302) conveying an analogue current signal associated with several ranges of values, each command being associated with a respective one of the ranges of values.

4. The thrust-reversal system (101; 301) according to any one of claims 1 to 3, wherein the local command module (120) comprises an analogue to digital converter (124) designed to convert the analogue signal(s) to digital data and a digital module (126) designed to process that digital data to determine the commands and control the electric actuator (114).

5. The thrust-reversal system (201) according to any one of claims 1 to 3, wherein the local command module (120) comprises an analogue circuit (202) designed to process the analogue signal(s) to determine commands and control the electric actuator (114).

6. The thrust-reversal system (101; 201; 301) according to any one of claims 1 to 5, wherein the electric actuator (114) comprises an electric motor (116) for moving the cover (112) and an inverter (118) designed to electrically activate the electric motor (116) from a direct current voltage bus (108) and wherein the local command module (120) is designed to control the inverter (118).

7. The thrust-reversal system (101; 201; 301) according to claim 6, further comprising a lock system referred to as primary lock system (132) designed to selectively lock and unlock the electric motor (116) of the electric actuator (114) of the thrust-reversal cover (112) and wherein the local command module (120) is designed:
- on receipt of the deploy command, to control the primary lock system (132) to unlock the electric motor (116) of the electric actuator (114) of the thrust-reversal cover (112) of the electric actuator (114) of the thrust-reversal cover (112) before the cover (112) has been moved to its deployed position; and
- on receipt of the stow command, to control the primary lock system (132) to lock the electric motor (116) of the electric actuator (114) of the thrust-reversal cover (112), after the cover (112) has been moved to its stowed position.

8. The thrust-reversal system (101; 201; 301) according to claim 6 or 7, further comprising a lock system referred to as tertiary lock system (134) designed to selectively lock and unlock the cover (112), wherein the cover (112) is further designed to be selectively moved to an overstowed position facilitating an unlocking of the cover (112) by the tertiary lock system (134) wherein the commands include a overstow command and wherein the local command module (120) is designed, upon receipt of the overstow command, to control the primary lock system (132) to unlock the electric motor (116) of the electric actuator (114) of the thrust-reversal cover (112) prior to controlling the inverter (118) so that the cover (112) is moved to its overstowing position.

9. An aircraft (100) comprising:
- a turbine engine (102); and
- the thrust-reversal system (101; 201; 301) according to any one of claims 1 to 8.
